# EUROPÄISCHE PATENTSCHRIFT

(11) **EP 2 691 659 B1**
(45) Veröffentlichungstag und Bekanntmachung des Hinweises auf die Patenterteilung: **27.07.2016**
(21) Anmeldenummer: 12713028.4
(22) Anmeldetag: 27.03.2012
(51) Int. Cl.: F16B 5/02, F16B 35/04, F16B 25/00

(54) **BEFESTIGUNGS-ANKER SOWIE BEFESTIGUNGS-ANKER-ANORDNUNG**
FASTENING ANCHOR AND FASTENING DEVICE
ANCRE D'ATTACHE ET STRUCTURE DE FIXATION

(30) Priorität: 30.03.2011 DE 102011006455
(43) Veröffentlichungstag der Anmeldung: 05.02.2014
(73) Patentinhaber: TOGE Dübel GmbH & Co. KG, 90431 Nürnberg (DE)
(72) Erfinder: GERHARD, Andreas, 90427 Nürnberg (DE)
(74) Vertreter: Rau, Schneck & Hübner Patentanwälte Rechtsanwälte PartGmbB
(86) Internationale Anmeldenummer: PCT/EP2012/055385
(87) Internationale Veröffentlichungsnummer: WO 2012/130826

(56) Entgegenhaltungen:
- EP-A1- 1 710 453
- EP-A2- 1 739 315
- US-A1- 2005 129 484
- US-A1- 2007 147 973

## Beschreibung

Die Erfindung betrifft einen Befestigungs-Anker zum Einschrauben in ein Bohrloch in ein, insbesondere sprödes, Material, insbesondere Naturstein und insbesondere Steinsalz oder Beton, sowie eine Befestigungs-Anker-Anordnung mit einem derartigen Befestigungsanker. Naturstein kann beispielsweise relativ weiches Gestein wie Schiefer oder sehr hartes Gestein wie Granit sein.

Durch offenkundige Vorbenutzung sind Befestigungs-Anker bekannt, die ein Schneid-Gewinde zum Einschrauben des Ankers in ein Material sowie ein Befestigungs-Gewinde zum Befestigen eines Befestigungs-Elements an dem in das Material eingeschraubten Anker aufweisen. Ein derartiger Befestigungs-Anker ist beispielsweise bekannt aus der US 2005/0129484 A1, aus der EP 1 710 453 A1, aus der US 2007/0147973 A1 und aus der EP 1 739 315 A2. Derartige Befestigungs-Anker werden beispielsweise in Beton eingeschraubt. Zum Eindrehen eines derartigen Befestigungs-Ankers in ein Beton-Bohrloch wird mittels des Schneid-Gewindes der Befestigungs-Anker in das Bohrloch eingeschnitten und dadurch gehalten. Dafür ist ein hohes Eindreh-Drehmoment erforderlich. Das Schneid-Gewinde und das Befestigungs-Gewinde weisen im Wesentlichen identische Außen-Durchmesser auf, wobei der Außen-Durchmesser des Befestigungs-Gewindes im Wesentlichen einem Innen-Durchmesser des Bohrlochs entspricht. Das bedeutet, dass bereits geringe Abweichungen des Befestigungs-Ankers hinsichtlich seiner Geradheit dazu führen können, dass der Befestigungs-Anker beim Eindrehen mit dem Befestigungs-Gewinde an einer Bohrloch-Innenwand zumindest abschnittsweise anliegt und zu einer zusätzlichen Erhöhung des Eindreh-Moments führt. Es ist möglich, dass in diesem Fall das zum Einschrauben erforderliche Eindreh-Drehmoment nicht zur Verfügung gestellt werden kann bzw. das Material des Befestigungs-Ankers in Folge des aufgebrachten, überhöhten Eindreh-Drehmoments versagt, d. h. der Befestigungs-Anker "abgedreht" wird. Der Befestigungs-Anker ist dann zerstört. Der Befestigungs-Anker ist hinsichtlich seiner Einschraubtiefe in das Bohrloch, die auch als Setztiefe bezeichnet wird, im Wesentlichen durch die Länge des Schneid-Gewindes entlang einer Mittel-Längs-Achse des Befestigungs-Ankers festgelegt.

Der Erfindung liegt die Aufgabe zugrunde, einen Befestigungs-Anker zu schaffen, der sicher und zerstörungsfrei in ein Bohrloch mit flexibler Einschraubtiefe einschraubbar ist.

Die Aufgabe wird durch einen Befestigungs-Anker mit den Merkmalen des Anspruchs 1 in nicht naheliegender Weise gelöst.

Der Kern der Erfindung besteht darin, dass ein Befestigungs-Gewinde einen Befestigungs-Gewinde-Durchmesser aufweist, der kleiner einem größten Schneid-Kern-Durchmesser in einem Schneid-Abschnitt des Befestigungs-Ankers ist. Insbesondere ist der Befestigungs-Gewinde-Durchmesser kleiner als der größte Schneid-Kern-Durchmesser an einem einem Einführende eines Kerns des Befestigungs-Ankers gegenüberliegenden Ende des Schneid-Abschnitts. Mit dem an dem Einführende des, insbesondere zylindrisch ausgeführten, Kerns des Befestigungs-Ankers angeordneten, sich zumindest abschnittsweise entlang des Schneid-Abschnitts erstreckenden, Schneid-Gewinde wird der Befestigungs-Anker in das Bohrloch eingeschraubt. Das Schneid-Gewinde schneidet sich in eine Bohrloch-Innenwand des Bohrlochs, wobei der Schneid-Kern-Durchmesser des Kerns in dem Schneid-Abschnitt kleiner ist als ein Innen-Durchmesser des Bohr lochs. Dadurch, dass der Befestigungs-Gewinde-Durchmesser kleiner ist als der Schneid-Kern-Durchmesser, kann der Befestigungs-Anker in das Bohr loch eingeschraubt werden, ohne dass die Gefahr besteht, dass der Befestigungs-Anker in einem Befestigungs-Abschnitt, in dem das Befestigungs-Gewinde angeordnet ist, an der Bohrloch-Innenwand anliegt und somit zu einer Erhöhung eines Eindreh-Drehmoments führt. Dadurch, dass der Kern des Befestigungs-Ankers im Befestigungs-Abschnitt einen reduzierten Durchmesser aufweist, ist es zudem möglich, den Befestigungs-Anker auf eine im Wesentlichen beliebige Einschraubtiefe, die auch als Setztiefe bezeichnet wird, einzuschrauben. Der Befestigungs-Anker kann mit einer flexiblen Einschraubtiefe in das Bohrloch eingeschraubt werden. Dadurch, dass ein Kontakt des Befestigungs-Ankers mit dem Befestigungs-Abschnitt an der Bohrloch-Innenwand vermieden ist, ist das Eindreh-Drehmoment nicht zusätzlich erhöht, sodass das Eindrehen des Befestigungs-Ankers sicher und zerstörungsfrei erfolgen kann. Gegenüber aus dem Stand der Technik bekannten Befestigungs-Ankern, die aufgrund einer entlang einer Mittel-Längs-Achse des Befestigungs-Ankers festgelegten Länge des Schneid-Gewindes eine maximale Einschraubtiefe aufweisen, ermöglicht der Befestigungs-Anker gemäß der vorliegenden Erfindung eine erhöhte Variabilität bezüglich der Einschraubtiefe. An einem, dem Einführende gegenüberliegenden Außenende weist der Befestigungs-Anker ein Drehmoment-Übertragungsmittel auf, um das Eindreh-Drehmoment von einem Eindreh-Werkzeug auf den Kern des Befestigungs-Ankers aufbringen zu können. Der Kern kann einen entlang der Mittel-Längs-Achse veränderlichen Schneid-Kern-Durchmesser und/oder Befestigungs-Kern-Durchmesser aufweisen, die beispielsweise in Folge eines Walz-Herstellungsverfahrens einen im Wesentlichen entlang der Mittel-Längs-Achse konischen oder tonnenförmigen Verlauf aufweisen. Bei einer derartigen Ausführung des Kerns weist dieser innerhalb des Schneid-Abschnitts einen größten Schneid-Kern-Durchmesser und/oder innerhalb des Befestigungs-Abschnitts einen größten Befestigungs-Kern-Durchmesser auf. Es ist auch möglich, dass der Schneid-Abschnitt einen schneid-gewindefreien Teilabschnitt aufweist, in dem also kein Schneid-Gewinde angeordnet ist. Dieser schneid-gewindefreie Abschnitt ist bevorzugt zwischen dem Schneid-Abschnitt und dem Befestigungs-Abschnitt angeordnet. Der schneid-gewindefreie Abschnitt des Kerns kann einen Schneid-Kern-Durchmesser aufweisen, der größer ist als der größte Schneid-Kern-Durchmesser des Schneid-Abschnitts in dem Bereich des Schneid-Gewindes. In diesem Fall bildet der Schneid-Kern-Durchmesser des schneid-gewindefreien Abschnitts den größten Schneid-Kern-Durchmesser in dem Schneid-Abschnitt. Insbesondere liegt dieser größte Schneid-Kern-Durchmesser an einem dem Einführende gegenüberliegenden Ende des Schneid-Abschnitts.

Ein Befestigungs-Anker nach Anspruch 2 weist verbesserte Schneideigenschaften auf. Dadurch ist es möglich, den Befestigungs-Anker mit vergleichsweise reduziertem Eindreh-Drehmoment in den Werkstoff einzudrehen.

Ein Befestigungs-Anker nach Anspruch 3 oder 4 ermöglicht eine vereinfachte Fertigung desselben. Dadurch, dass der Befestigungs-Gewinde-Durchmesser bezüglich des Schneid-Kern-Durchmessers limitiert ist bzw. die Mittel-Längs-Achse eine Geradheitstoleranz bezüglich des Schneid-Kern-Durchmessers aufweist, ist eine Abweichung bei der Herstellung des Befestigungs-Ankers zulässig, wobei ein Eindrehen des Befestigungs-Ankers immer noch ohne Erhöhung des Eindreh-Drehmoments in Folge von Reibeffekten des Befestigungs-Gewindes an der Bohrloch-Innenwand möglich ist. Die Herstellung des Befestigungs-Ankers ist vereinfacht und damit kostenreduziert. Die Genauigkeitsanforderungen bei der Herstellung sind reduziert.

Ein Befestigungs-Anker nach Anspruch 5 weist einen homogenen Materialverlauf auf und hat eine besonders hohe Festigkeit. Das Fertigungsverfahren zur Herstellung des Befestigungs-Ankers ist effektiv und ökonomisch.

Ein Befestigungs-Anker nach Anspruch 6 kann einen Kern aufweisen, der aus beispielsweise zwei verschiedenen Materialien hergestellt ist. Dadurch ist es möglich, die unterschiedlichen Abschnitte des Kerns an die jeweiligen Anforderungen an den Schneid-Abschnitt bzw. an den Befestigungs-Abschnitt anzupassen. So ist es beispielsweise möglich, den Schneid-Abschnitt aus einem Material herzustellen, das eine hohe Härte und eine hohe Festigkeit aufweist. Dagegen kann der Befestigungs-Abschnitt eine hohe Elastizität aufweisen. Es ist auch möglich, vor dem Fügen des Befestigungs-Abschnitts mit dem Schneid-Abschnitt zu dem Befestigungs-Anker die beiden Abschnitte gemeinsam oder separat voneinander einer weiterführenden Bearbeitung auszusetzen, wie beispielsweise einem Härteverfahren, einem Beschichtungsverfahren o. ä. Dadurch ist es möglich, die beiden Abschnitte mit jeweils maßgeschneiderten Materialeigenschaften herzustellen und anschließend zu dem Befestigungs-Anker zu verbinden. Der Befestigungs-Anker weist für eine vorgesehene Verwendung optimierte mechanische Eigenschaften auf.

Ein Befestigungs-Anker nach Anspruch 7 gewährleistet eine ausreichende Befestigung in dem Bohrloch.

Ein Befestigungs-Anker nach Anspruch 8 ermöglicht eine hohe Setztiefe in dem Bohrloch. Dadurch, dass der Befestigungs-Abschnitt gegenüber dem Schneid-Abschnitt eine erhöhte Länge entlang der Mittel-Längs-Achse des Befestigungs-Ankers aufweist, ist es möglich, dass der Befestigungs-Abschnitt zumindest abschnittsweise innerhalb des Bohrlochs angeordnet sein kann und dennoch aus dem Bohrloch hervorragt. Die Befestigung eines Befestigungs-Elements an dem Befestigungs-Abschnitt ist immer noch möglich.

Ein Befestigungs-Anker nach Anspruch 9 ermöglicht eine unkomplizierte Aufbringung des Eindreh-Drehmoments. Dadurch, dass das Drehmoment-Übertragungsmittel am Außenende vorgesehen ist, ist das Drehmoment-Übertragungsmittel unabhängig von der aktuellen Einschraubtiefe des Befestigungs-Ankers gut zugänglich. Insbesondere ist das Drehmoment-Übertragungsmittel auch gut dann gut zugänglich, wenn bereits ein Befestigungs-Element an dem Befestigungs-Abschnitt angebracht ist. Das Drehmoment-Übertragungsmittel kann beispielsweise als Außen-Sechskantprofil ausgeführt sein. Es ist auch möglich, dass das Drehmoment-Übertragungsmittel andere Querschnittsformen bezüglich der Mittel-Längs-Achse aufweist, wie beispielsweise einen Vierkant-Querschnitt. Es ist auch möglich, das Drehmoment-Übertragungsmittel als Innen-Querschnittsprofil, insbesondere als Innen-Sechskantprofil, auszuführen. Ein derartiger Befestigungs-Anker weist eine besonders kompakte Form auf.

Es ist eine weitere Aufgabe der vorliegenden Erfindung, eine Befestigungs-Anker-Anordnung bereitzustellen, die eine verbesserte Verbindungs-Festigkeit mit einem Material, in das der Befestigungs-Anker eingedreht ist, aufweist.

Diese Aufgabe ist durch eine Befestigungs-Anker-Anordnung mit den Merkmalen des Anspruchs 10 in nicht naheliegender Weise gelöst.

Bei einer derartigen Befestigungs-Anker-Anordnung ist in einem Bohrloch eine Verbundmasse vorgesehen, wobei das Bohrloch einen Bohrloch-Durchmesser aufweist, der kleiner ist als der Schneid-Gewinde-Durchmesser des Befestigungs-Ankers und der größer ist als der Befestigungs-Gewinde-Durchmesser des Befestigungs-Ankers. Insbesondere ist der Befestigungs-Gewinde-Durchmesser an einem dem Schneid-Abschnitt zugewandten Ende kleiner als ein größter Schneid-Kern-Durchmesser. Dadurch ist gewährleistet, dass der Befestigungs-Anker mit dem Schneid-Gewinde sich in eine Bohrloch-Innenwand einschneidet und gleichzeitig mit dem Befestigungs-Gewinde nicht an der Bohrloch-Innenwand anliegt, auch wenn der Befestigungs-Abschnitt zumindest abschnittsweise innerhalb des Bohrlochs angeordnet ist. Die Verbundmasse dient zur zusätzlichen Haftung des Befestigungs-Ankers in dem Bohrloch und führt damit zu einer erhöhten Festigkeit der Befestigungs-Anker-Anordnung.

Eine Befestigungs-Anker-Anordnung nach Anspruch 11 ermöglicht eine Sanierung eines zumindest teilweise vorgeschädigten Materials, in das der Befestigungs-Anker eingedreht ist. Das vorgeschädigte Material kann beispielsweise einen oder mehrere Risse aufweisen, die sich von dem Bohrloch aus in das Material erstrecken. Dadurch, dass die Verbundmasse dünnflüssig ist und eine geringe Viskosität aufweist, ist es nicht erforderlich, den Bohrloch-Durchmesser zu verändern, d. h. zu vergrößern, falls die Verbundmasse verwendet wird. Es ist nicht erforderlich, in Abhängigkeit einer Verwendung der Verbundmasse verschiedene Bohrer, d.h. Bohrer mit verschiedenen Durchmessern, zur Herstellung des Bohrlochs zu verwenden. Die Verwendung der Befestigungs-Anker-Anordnung ist vereinfacht. Die Befestigungs-Anker-Anordnung ist flexibel anwendbar.

Eine Befestigungs-Anker-Anordnung nach Anspruch 12 ermöglicht eine zusätzliche Stabilisierung, insbesondere in einem spröden Material wie beispielsweise Salzstein oder Schiefer, wobei diese spröden Materialien beispielsweise durch vorangegangene Sprengungen geschädigt sein und Risse aufweisen können. Es ist auch möglich, Sandstein, Beton oder andere Materialien durch die Verwendung der Verbundmasse zu sanieren. Dadurch, dass die dünnflüssige Verbundmasse in einen in Folge der Bohrloch-Herstellung entstandenen Riss in dem Material eindringen kann und während des Eindrehens des Befestigungs-Ankers in dem Riss verpresst wird, ist die Stabilität der Befestigungs-Anker-Anordnung zusätzlich erhöht.

Bei einer Befestigungs-Anker-Anordnung nach Anspruch 13 ist die Zugänglichkeit des Befestigungs-Abschnitts unabhängig von der Setztiefe des Befestigungs-Ankers gewährleistet.

Bei einer Befestigungs-Anker-Anordnung nach Anspruch 14 ist eine Kerbwirkung des Befestigungs-Ankers aufgrund eines Durchmesserunterschiedes zwischen dem Befestigungs-Abschnitt und dem Schneid-Abschnitt des Befestigungs-Ankers reduziert. Ein derartiger Befestigungs-Anker führt zu einer verbesserten Stabilität und Festigkeit der Befestigungs-Anker-Anordnung. Insbesondere ist die dynamische Festigkeit beispielsweise bei einer schwingenden Belastung eines an dem Befestigungs-Anker befestigten Befestigungs-Mittels verbessert. Dadurch, dass der Befestigungs-Anker an dem Übergang von dem Schneid-Abschnitt zu dem Befestigungs-Abschnitt, der insbesondere durch einen Durchmesser-Sprung des Kerns gekennzeichnet ist, durch die ausgehärtete Verbundmasse zusätzlich gehalten ist, ist die Befestigung des Befestigungs-Ankers in dem Bohrloch zusätzlich erhöht.

Eine Befestigungs-Anker-Anordnung nach Anspruch 15 weist eine verbesserte Stabilität auf, da der Befestigungs-Anker auch im Bereich des Befestigungs-Abschnitts, d. h. im Bereich eines reduzierten Durchmessers, in dem Bohrloch radial bezüglich der Mittel-Längs-Achse fixiert ist.

Zusätzliche Merkmale und Einzelheiten der Erfindung ergeben sich aus der Beschreibung eines Ausführungsbeispiels anhand der Zeichnung. Es zeigen:

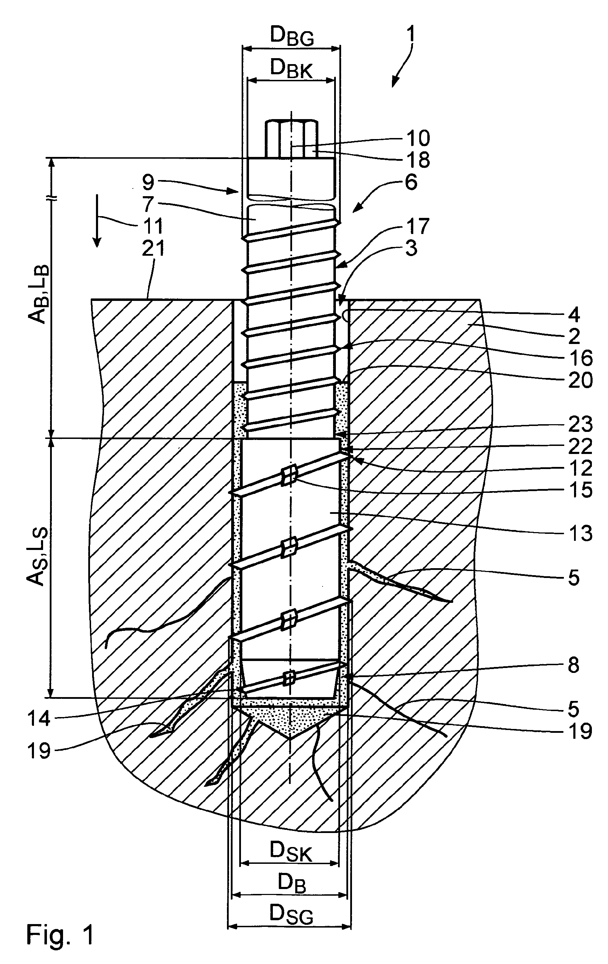

- Fig. 1: einen Längs-Schnitt durch ein Material mit einem darin eingeschraubten Befestigungs-Anker.

Im Folgenden wird unter Bezugnahme auf die Fig. 1 eine Befestigungs-Anker-Anordnung 1 beschrieben. Die Befestigungs-Anker-Anordnung 1 umfasst Steinsalz als Material 2, in dem ein Bohrloch 3 mit einem Bohrloch-Durchmesser D_{B} und einer Bohrloch-Innenwand 4 angeordnet ist. Das Bohrloch 3 ist als Sackloch ausgeführt. Es ist auch möglich, dass das Bohrloch 3 in einem anderen Material 2 wie beispielsweise Sandstein oder Beton angeordnet ist. Insbesondere ist es möglich, das Bohrloch 3 in einem Bergwerks-Gestein anzuordnen. Dadurch, dass das in Fig. 1 dargestellte Steinsalz ein sprödes Material ist, können in Folge der Bohrloch-Herstellung, d. h. des Bohrvorgangs, Risse 5 in dem Material 2 entstehen. Die Risse 5 erstrecken sich ausgehend von der Bohrloch-Innenwand 4 des Bohrlochs 3 in das Material 2.

In dem Bohrloch 3 ist ein Befestigungs-Anker 6 angeordnet. Der Befestigungs-Anker 6 umfasst einen insbesondere zylindrischen Kern 7 mit einem Einführende 8, einem dem Einführende 8 gegenüberliegenden Außenende 9, einer Mittel-Längs-Achse 10 und einer zur Mittel-Längs-Achse 10 parallel gerichteten Einschraub-Richtung 11. Der Kern 7 weist einen Schneid-Abschnitt A_{S} auf, entlang dessen sich ein Schneid-Gewinde 12 zum Einschrauben des Schneid-Gewindes 12 in das Material 2 erstreckt. Es ist auch möglich, dass sich das Schneid-Gewinde 12 lediglich abschnittsweise entlang des Schneid-Abschnitts A_{S} erstreckt. Bei einer derartigen, nicht in Fig. 1 dargestellten Ausführungsform des Befestigungs-Ankers weist der Schneid-Abschnitt A_{S} einen ersten Abschnitt auf, entlang dessen sich das Schneid-Gewinde 12 erstreckt. Weiterhin umfasst der Schneid-Abschnitt A_{S} einen zweiten, schneid-gewindefreien Abschnitt, der sich dem Schneid-Gewinde 12 anschließt. Das Schneid-Gewinde 12 wird vorzugsweise durch Walzen aus einem im Wesentlichen zylindrischen Kern hergestellt. Der zweite, schneid-gewindefreie Abschnitt ist der Abschnitt des Kerns 7, der nicht durch Walzen zu dem Schneid-Gewinde umgeformt worden ist. Der schneid-gewindefreie Abschnitt ist insbesondere zwischen dem Schneid-Gewinde 12 und einem Befestigungs-Gewinde 16 entlang der Mittel-Längs-Achse 10 angeordnet.

Der Schneid-Abschnitt A_{S} des Befestigungs-Ankers 6 wird auch als Schneid-Kopf 13 bezeichnet. Das Schneid-Gewinde 12 hat einen Schneid-Kern-Durchmesser D_{SK}, einen Schneid-Gewinde-Durchmesser D_{SG} und einen am Einführende 8 angeordneten Schneid-Gewinde-Anfang 14. Bei der nicht dargestellten Ausführungsform des Befestigungs-Ankers 6 mit dem zweiten, schneid-gewindefreien Abschnitt am Schneid-Abschnitt A_{S} kann der Schneid-Kern-Durchmesser D_{SK} größer sein als im ersten Abschnitt, d.h. im Bereich des Schneid-Gewindes 12. Es ist auch möglich, dass der Kern 7 entlang der Mittel-Längs-Achse 10 konisch oder tonnenförmig, d.h. konvex, ausgeführt ist. Das bedeutet, dass der Schneid-Kern-Durchmesser D_{SK}, insbesondere in dem schneid-gewindefreien Abschnitt, entlang der Mittel-Längs-Achse 10 veränderlich ist. Entsprechend existiert in diesem Bereich ein größter Schneid-Kern-Durchmesser D_{SK,max} und ein kleinster Schneid-Kern-Durchmesser D_{SK,min}. In diesem Fall ist es möglich, dass der größte Schneid-Kern-Durchmesser D_{SK,max} größer ist als der Schneid-Gewinde-Durchmesser D_{SG} des Schneid-Abschnitts A_{S}.

An dem Schneid-Gewinde 12 sind mehrere, d. h. je Gewindegang ein, Schneid-Element 15 vorgesehen, um das Eindrehen des Befestigungs-Ankers 6 in das Material 2 zu erleichtern. Als Gewindegang wird ein voller Umlauf der Schraubenlinie des Schneid-Gewindes 12 verstanden. Die Schneid-Elemente 15 sind entlang einer zur Mittel-Längs-Achse 10 parallel orientierten Mantellinie angeordnet. Es ist auch möglich, die Schneid-Elemente 15 bezüglich einer zur Mittel-Längs-Achse 10 parallelen Mantellinie versetzt anzuordnen. Die Schneid-Elemente 15 können auch in einer anderen Anzahl, d. h. mehrere Schneid-Elemente 15 je Gewindegang des Schneid-Gewindes 12, vorgesehen sein. Es ist auch möglich, den Befestigungs-Anker 6 ohne Schneid-Elemente auszuführen. Als Schneid-Element 15 kann Schneidmaterial mit hoher Härte und Festigkeit wie beispielsweise Diamant, TiC, TiN und/oder Hartmetall oder Schnellstahl wie beispielsweise Schnellarbeitsstahl oder Hochleistungs-Schnellstahl (HSS) eingesetzt werden. Gemäß dem gezeigten Ausführungsbeispiel weist das Schneid-Gewinde 12 vier Gewindegänge auf. Es ist vorteilhaft, wenn mindestens drei Gewindegänge des Schneid-Gewindes 12 vorgesehen sind, um eine ausreichende Befestigung des Befestigungs-Ankers 6 in dem Bohrloch 3 zu ermöglichen. Es ist auch möglich, dass das Schneid-Gewinde 12 fünf oder mehr Gewindegänge aufweist. Der Schneid-Abschnitt A_{S} weist entlang der Mittel-Längs-Achse 10 eine Schneid-Abschnitts-Länge L_{S} auf. Dem Einführende 8 ist an dem Schneid-Abschnitt A_{S} ein Ende 22 vorgesehen.

An das Ende 22 des Schneid-Abschnitts A_{S} schließt sich entlang der Mittel-Längs-Achse 10 unmittelbar der Befestigungs-Abschnitt A_{B} mit einem Ende 23 an. Es ist auch möglich, dass zwischen dem Schneid-Abschnitt A_{S} und dem Befestigungs-Abschnitt A_{B} mindestens ein weiterer Funktions-Abschnitt des Befestigungs-Ankers 6 vorgesehen ist. Entlang des Befestigungs-Abschnitts A_{B} erstreckt sich ein einstückig mit dem Kern 7 ausgebildetes Befestigungs-Gewinde 16 zum Befestigen eines nicht dargestellten Befestigungs-Elements an dem Befestigungs-Anker 6. Das BefestigungsElement ist außerhalb des Bohrlochs 3 angeordnet. Gemäß dem gezeigten Ausführungsbeispiel ist das Befestigungs-Gewinde 16 als metrisches Außengewinde ausgeführt. Es ist auch möglich, dass das Befestigungs-Gewinde 16 beispielsweise als ein Fractional-Gewinde ausgeführt ist.

In dem Befestigungs-Abschnitt A_{B} hat das Befestigungs-Gewinde 16 einen Befestigungs-Kern-Durchmesser D_{BK} und eine Befestigungs-Gewinde-Durchmesser D_{BG}. Sowohl der Befestigungs-Kern-Durchmesser D_{BK} als auch der Befestigungs-Gewinde-Durchmesser D_{BG} sind gegenüber dem Schneid-Kern-Durchmesser D_{SK} reduziert. Der Schneid-Gewinde-Durchmesser D_{SG} ist größer als der Bohrloch-Durchmesser D_{B}. Dagegen ist der Befestigungs-Gewinde-Durchmesser D_{BG} kleiner als der Bohrloch-Durchmesser D_{B}. Gemäß dem gezeigten Ausführungsbeispiel beträgt der Bohrloch-Durchmesser D_{B} 22 mm. Der Befestigungs-Gewinde-Durchmesser D_{BG} beträgt 20 mm. Der Schneid-Kern-Durchmesser D_{SK} ist gegenüber dem Bohrloch-Durchmesser D_{B} geringfügig reduziert und beträgt beispielsweise 21,5 mm. Es ist auch möglich, das Bohrloch 3 mit einem Bohrloch-Durchmesser D_{B} von 16 mm oder 10 mm auszuführen. In diesem Fall ist der Befestigungs-Gewinde-Durchmesser D_{BG} 14 mm bzw. 8 mm. Der Schneid-Kern-Durchmesser D_{SK} ist jeweils gegenüber dem Bohrloch-Durchmesser D_{B} geringfügig reduziert, um ein Anliegen des Befestigungs-Ankers 6 mit dem Kern 7 an der Bohrloch-Innenwand 4 zu vermeiden. Dadurch wird das für das Eindrehen des Befestigungs-Ankers 6 erforderliche Eindreh-Drehmoment nicht zusätzlich erhöht.

Der Befestigungs-Gewinde-Durchmesser D_{BG} beträgt gemäß dem gezeigten Ausführungsbeispiel etwa 93% des Schneid-Kern-Durchmesser D_{SK}. Insbesondere beträgt der Befestigungs-Gewinde-Durchmesser D_{BG} höchstens 94% des Schneid-Kern-Durchmessers D_{SK}, insbesondere höchstens 90% und insbesondere höchstens 83%. Dadurch ist gewährleistet, dass bei einer Abweichung der Geradheit des Kerns 7 des Befestigungs-Ankers 6 ein Anliegen des Befestigungs-Ankers 6 mit dem Befestigungs-Abschnitt A_{B} an der Bohrloch-Innenwand 4 vermieden wird, wenn der Befestigungs-Abschnitt A_{B} - wie gezeigt - zumindest abschnittsweise innerhalb des Bohrlochs 3 angeordnet ist. Entsprechend ist bei der Herstellung des Befestigungs-Ankers 6 eine Geradheits-Toleranz der Mittel-Längs-Achse 10 von höchstens 17% bezogen auf den Schneid-Kern-Durchmesser D_{SK}, insbesondere von höchstens 10% und insbesondere von höchstens 6% einzuhalten.

Die Herstellung des Befestigungs-Ankers 6 kann dadurch erfolgen, dass der Kern 7 einstückig ausgeführt und insbesondere durch Walzen hergestellt ist. Es ist alternativ auch möglich, den Schneid-Kopf 13 separat herzustellen. Entsprechend wird auch ein den Befestigungs-Abschnitt A_{B} des Kerns 7 bildender Schaft 17 separat hergestellt. Der Schaft 17 und der Schneid-Kopf 13 werden anschließend fest, beispielsweise unlösbar und insbesondere durch Schweißen wie beispielsweise Reibschweißen zu dem Kern 7 miteinander verbunden.

Der Befestigungs-Abschnitt A_{B} weist eine entlang der Mittel-Längs-Achse 10 gerichtete Befestigungs-Abschnitts-Länge L_{B} auf, die gleich lang ist wie die Schneid-Abschnitts-Länge L_{S}. Es ist auch möglich, dass die Befestigungs-Abschnitts-Länge L_{B} länger ist als die Schneid-Abschnitts-Länge L_{S}, insbesondere mindestens das Dreifache der Schneid-Abschnitts-Länge L_{S} und insbesondere mindestens das Vierfache der Schneid-Abschnitts-Länge L_{S} beträgt. Dadurch ist eine sehr variable Eindrehtiefe, die auch als Setztiefe bekannt ist, des Befestigungs-Ankers 6 möglich, da auch bei großen Setztiefen, die beispielsweise ein Vielfaches der Schneid-Abschnitts-Länge L_{S} betragen können, gewährleistet ist, dass der Befestigungs-Anker 6 zumindest abschnittsweise mit dem Befestigungs-Abschnitt A_{B} aus dem Bohrloch 3 hervorragt. Gemäß der in Fig. 1 gezeigten Ausführung ragt der Befestigungs-Anker 6 mit dem Befestigungs-Abschnitt A_{B} abschnittsweise an einer das Bohrloch 3 begrenzenden Stirnfläche 21 des Materials 2 hervor. Dadurch ist gewährleistet, dass die Befestigung eines nicht dargestellten Befestigungs-Elements an dem Befestigungs-Anker 6 auch bei sehr großen Setztiefen noch möglich ist.

An dem Außenende 9 ist an dem Kern 7 ein Drehmoment-Übertragungsmittel 18 angeordnet, um ein Eindreh-Drehmoment von einem Eindreh-Werkzeug auf den Kern 7 zu übertragen, um das Eindrehen des Befestigungs-Ankers 6 in das Material 2 zu ermöglichen. Gemäß dem gezeigten Ausführungsbeispiel ist das Drehmoment-Übertragungsmittel 18 als Außensechskant gestaltet. Es sind auch andere Querschnittsformen, die beispielsweise als Außen-, aber auch als Innen-Profil gestaltet sein können.

Es ist zudem möglich, vor dem Eindrehen des Befestigungs-Ankers 6 in das Bohrloch 3 in diesem eine dünnflüssige Verbundmasse 19 anzuordnen, die beispielsweise eine Viskosität von höchstens 10 mPa/s, insbesondere von höchstens 1 mPa/s und insbesondere von höchstens 0,1 mPa/s aufweist. Gegenüber aus dem Stand der Technik bekannten Verbundmassen weist die Verbundmasse 19 eine reduzierte Viskosität auf. Insbesondere weist die Verbundmasse 19 ein thixotropes Verhalten derart auf, dass sich die Viskosität der Verbundmasse 19 aufgrund eines auf die Verbundmasse 19 wirkenden Drucks beim Eindrehen des Befestigungs-Ankers nicht erhöht und insbesondere reduziert. Das bedeutet, dass die Verbundmasse 19 aufgrund der mechanischen Verpressung während des Eindrehens des Befestigungs-Ankers nicht zähflüssig und insbesondere dünnflüssiger wird. Dadurch ist ermöglicht, dass die Verbundmasse 19 in die Risse 5 des Materials 2 eindringen kann, auch wenn diese Risse sehr fein und lang sind und beispielsweise Rissöffnungsbreiten aufweisen, die kleiner sind als 1 mm. Dadurch ist es nicht erforderlich, dass der Bohrloch-Durchmesser D_{B} in Abhängigkeit der Verwendung der Verbundmasse 19 angepasst wird. Durch Eindrehen des Befestigungs-Ankers 6 in das Bohrloch 3 mit der Verbundmasse 19 wird diese entgegen der Einschraub-Richtung 11 in dem Bohrloch 3 nach oben und in die Risse 5 gepresst. Dadurch, dass die Verbundmasse 19 in die Risse 5 gepresst wird, wird das Material 2 im Bereich des Bohrlochs 3 saniert. Die Befestigung der Befestigungs-Anker-Anordnung 1 ist dadurch verbessert.

Gemäß dem gezeigten Ausführungsbeispiel ist der Schneid-Abschnitt A_{S} von der Verbundmasse 19 eingehüllt. Zudem ist die Verbundmasse 19 zumindest abschnittsweise im Bereich des Befestigungs-Abschnitts A_{B} angeordnet. Dadurch sind der Befestigungs-Abschnitt A_{B} und der Schneid-Abschnitt A_{S} durch die ausgehärtete Verbundmasse 19 miteinander verbunden. Die Verbundmasse 19 bildet eine Stirn-Ringfläche 20. Die ausgehärtete Verbundmasse 19 führt zu einem kontinuierlicheren Durchmesserübergang von dem Befestigungs-Kern-Durchmesser D_{BK} zu dem Schneid-Kern-Durchmesser D_{SK} des Befestigungs-Ankers 6. Eine möglicherweise auftretende Kerbwirkung bei dem Befestigungs-Anker 6 ist dadurch reduziert. Dadurch, dass der Befestigungs-Anker 6 auch in dem Befestigungs-Abschnitt A_{B} durch die ausgehärtete Verbundmasse 19 in dem Bohrloch 3 gehalten ist, indem die ausgehärtete Verbundmasse 19 den Befestigungs-Anker 6 zumindest abschnittsweise im Bereich des Befestigungs-Abschnitts A_{B} mit der Bohrloch-Innenwand 4 verbindet, ist die Festigkeit und Stabilität der Befestigungs-Anker-Anordnung 1 zusätzlich verbessert. Die ausgehärtete Verbundmasse 19 dient als zusätzliche Befestigung des Befestigungs-Ankers 6 gegen ein Herausziehen aus dem Bohrloch 3 entgegen der Einschraub-Richtung 11. Die ausgehärtete Verbundmasse 19 hält den Befestigungs-Anker 6 an dem Durchmesserübergang von dem Schneid-Kern-Durchmesser D_{SK} am Ende 22 des Schneid-Abschnitts A_{S} zu dem Ende 23 des Befestigungs-Abschnitts A_{B}, der den Befestigungs-Kern-Durchmesser D_{BK} aufweist. Diese dadurch gebildete Schulter wird gegen ein Herausziehen entgegen der Einschraub-Richtung 11 aus dem Bohrloch 3 durch die Verbundmasse 19 gehalten. Die Verankerung des Befestigungs-Ankers 6 in dem Bohrloch 3 ist dadurch zusätzlich erhöht.

## Patentansprüche

1. Befestigungs-Anker (6) zum Einschrauben in ein Bohrloch (3) in ein Material (2), wobei der Befestigungs-Anker (6) umfasst
a. einen Kern (7) mit
i. einem Einführende (8),
ii. einem diesem gegenüberliegenden Außenende (9),
iii. einer Mittel-Längs-Achse (10) und
iv. einer dazu parallelen Einschraub-Richtung (11),
b. ein einstückig mit dem Kern (7) ausgebildetes, sich zumindest abschnittsweise entlang eines Schneid-Abschnitts (A_{S}) erstreckendes Schneid-Gewinde (12) zum Einschrauben desselben in das Material mit
i. einem Schneid-Kern-Durchmesser (D_{SK}),
ii. einem Schneid-Gewinde-Durchmesser (D_{SG}) und
iii. einem am Einführende (8) angeordneten Schneid-Gewinde-Anfang (14),
c. ein einstückig mit dem Kern (7) ausgebildetes, sich entlang eines Befestigungs-Abschnitts (A_{B}) erstreckendes Befestigungs-Gewinde (16) zum Befestigen eines Befestigungs-Elements mit
i. einem Befestigungs-Kern-Durchmesser (D_{BK}) und
ii. einem Befestigungs-Gewinde-Durchmesser (D_{BG}),
d. ein am Kern (7) angeordnetes Drehmoment-Übertragungsmittel (18) zur Übertragung eines Eindreh-Drehmoments von einem Eindreh-Werkzeug auf den Kern (7) zum Einschrauben desselben in das Material, **dadurch gekennzeichnet, dass** der Befestigungs-Gewinde-Durchmesser (D_{BG}) kleiner ist als der größte Schneid-Kern-Durchmesser (D_{SK}).

2. Befestigungs-Anker gemäß Anspruch 1, **gekennzeichnet durch** mindestens ein Schneid-Element (15) des Schneid-Gewindes (12) zum Einschneiden in den Werkstoff.

3. Befestigungs-Anker gemäß einem der vorstehenden Ansprüche, **dadurch gekennzeichnet, dass** der Befestigungs-Gewinde-Durchmesser (D_{BG}) höchstens 94% des Schneid-Kern-Durchmessers (D_{SK}) beträgt, insbesondere höchstens 90% und insbesondere höchstens 83%.

4. Befestigungs-Anker gemäß einem der vorstehenden Ansprüche, **gekennzeichnet durch** eine Geradheits-Toleranz der Mittel-Längs-Achse (10) von höchstens 17% des Schneid-Kern-Durchmessers (D_{SK}), insbesondere höchstens 10% und insbesondere höchstens 6%.

5. Befestigungs-Anker gemäß einem der vorstehenden Ansprüche, **dadurch gekennzeichnet, dass** der Kern (7) einstückig ausgeführt und insbesondere durch Walzen hergestellt ist.

6. Befestigungs-Anker gemäß einem der Ansprüche 1 bis 5, **dadurch gekennzeichnet, dass** der Schneid-Abschnitt (A_{S}) an einem Schneid-Kopf (13) und der Befestigungs-Abschnitt (A_{B}) an einem Schaft (17) angeordnet sind, wobei der Schneid-Kopf (13) und der Schaft (17) fest, insbesondere durch Schweißen, zu dem Kern (7) verbunden sind.

7. Befestigungs-Anker gemäß einem der vorstehenden Ansprüche, **dadurch gekennzeichnet, dass** das Schneid-Gewinde (12) mindestens drei Gewindegänge, insbesondere mindestens vier Gewindegänge und insbesondere mindestens fünf Gewindegänge aufweist.

8. Befestigungs-Anker gemäß einem der vorstehenden Ansprüche, **dadurch gekennzeichnet, dass** eine Befestigungs-Abschnitts-Länge (L_{B}) des Befestigungs-Abschnitts (A_{B}) entlang der Mittel-Längs-Achse (10) mindestens gleich lang ist wie eine Schneid-Abschnitts-Länge (L_{S}) und insbesondere länger ist als die Schneid-Abschnitts-Länge (L_{S}), insbesondere mindestens das Dreifache der Schneid-Abschnitts-Länge (L_{S}) des Schneid-Abschnitts (A_{S}) entlang der Mittel-Längs-Achse (10) und insbesondere mindestens das Vierfache der Schneid-Abschnitts-Länge (L_{S}) des Schneid-Abschnitts (A_{S}) ist.

9. Befestigungs-Anker gemäß einem der vorstehenden Ansprüche, **dadurch gekennzeichnet, dass** das Drehmoment-Übertragungsmittel (18) am Außenende (9) angeordnet und insbesondere als Außen-Sechskantprofil ausgeführt ist.

10. Befestigungs-Anker-Anordnung (1) in einem Material (2), umfassend
a. ein in dem Material (2) angeordnetes Bohrloch (3) mit
i. einem Bohrloch-Durchmesser (D_{B}) und
ii. einer Bohrloch-Innenwand (4),
b. einen in das Bohrloch (3) eingeschraubten Befestigungs-Anker (6) nach einem der vorstehenden Ansprüche und
c. eine in dem Bohrloch (3) angeordnete Verbundmasse (19), wobei
d. der Schneid-Gewinde-Durchmesser (D_{SG}) des Befestigungs-Ankers (6) größer ist als der Bohrloch-Durchmesser (D_{B}) des Bohrlochs (3) und
e. der Befestigungs-Gewinde-Durchmesser (D_{BG}) des Befestigungs-Ankers (6)kleiner ist als der Bohrloch-Durchmesser (D_{B}) des Bohrlochs (3) und kleiner ist als ein größter Schneid-Kern-Durchmesser (D_{SK}).

11. Befestigungs-Anker-Anordnung nach Anspruch 10, **dadurch gekennzeichnet, dass** die Verbundmasse (19) dünnflüssig ist und insbesondere eine Viskosität von höchstens 10 mPa/s, insbesondere von höchstens 1 mPa/s und insbesondere von höchstens 0,1 mPa/s aufweist.

12. Befestigungs-Anker-Anordnung nach Anspruch 11, **gekennzeichnet durch** mindestens einen, sich von dem Bohrloch (3) aus erstreckenden Riss (5) in dem Material (2), wobei die Verbundmasse (19) zumindest abschnittsweise in dem mindestens einen Riss (5) angeordnet ist.

13. Befestigungs-Anker-Anordnung nach einem der Ansprüche 10 bis 12, **dadurch gekennzeichnet, dass** der Befestigungs-Abschnitt (A_{B}) zumindest abschnittsweise an einer das Bohrloch (3) begrenzenden Stirnfläche (21) des Materials (2) hervorsteht.

14. Befestigungs-Anker-Anordnung nach einem der Ansprüche 10 bis 13, **dadurch gekennzeichnet, dass** die Verbundmasse (19) den Befestigungs-Abschnitt (A_{B}) mit dem Schneid-Abschnitt (A_{S}) verbindet.

15. Befestigungs-Anker-Anordnung nach einem der Ansprüche 10 bis 14, **dadurch gekennzeichnet, dass** die Verbundmasse (19) den Befestigungs-Anker (6) mit der Bohrloch-Innenwand (4) im Bereich des Befestigungs-Abschnitts (A_{B}) verbindet.

## Claims

1. Fastening anchor (6) for screwing into a borehole (3) in a material (2), wherein the fastening anchor (6) comprises
a. a core (7) with
i. an insertion end (8),
ii. an outer end (9) opposite the latter,
iii. a central longitudinal axis (10) and
iv. a screwing in direction (11) parallel thereto,
b. a cutting thread (12) designed in one piece with the core (7) and extending at least partly along a cutting section (As) for screwing the latter into the material with
i. a cutting core diameter (D_{SK}),
ii. a cutting thread diameter (D_{SG}) and
iii. a cutting thread origin (14) arranged at the insertion end (8)
c. a securing thread (16) designed in one piece with the core (7) and extending along a fastening section (A_{B}) for securing a fastening element with
i. a fastening core diameter (D_{BK}) and
ii. a fastening thread diameter (D_{BG}),
d. a torque transmission means (18) arranged on the core (7) for transmitting a screw-in torque of a screw-in tool to the core (7) for screwing the latter into the material,
**characterised in that** the fastening thread diameter (D_{BG}) is smaller than the greatest cutting core diameter (D_{SK}).

2. Fastening anchor according to claim 1, **characterised by** at least one cutting element (15) of the cutting thread (12) for cutting into the material.

3. Fastening anchor according to any one of the preceding claims, **characterised in that** the fastening thread diameter (D_{BG}) is at most 94% of the cutting core diameter (D_{SK}), in particular at most 90% and in particular at most 83%.

4. Fastening anchor according to any one of the preceding claims, **characterised by** a straightness tolerance of the central longitudinal axis (10) of at most 17% of the cutting core diameter (D_{SK}), in particular at most 10% and in particular at most 6%.

5. Fastening anchor according to any one of the preceding claims, **characterised in that** the core (7) is designed in one piece and is produced by rolling in particular.

6. Fastening anchor according to any one of claims 1 to 5, **characterised in that** the cutting section (As) is arranged on a cutting head (13) and the fastening section (A_{B}) is arranged on a shaft (17), wherein the cutting head (13) and the shaft (17) are connected securely to the core (7), in particular by welding.

7. Fastening anchor according to any one of the preceding claims, **characterised in that** the cutting thread (12) comprises at least three threads, in particular at least four threads and in particular at least five threads.

8. Fastening anchor according to any one of the preceding claims, **characterised in that** a fastening section length (L_{B}) of the fastening section (A_{B}) along the central longitudinal axis(10) is at least the same length as a cutting section length (Ls) and in particular is longer than the cutting section length (Ls), in particular at least three times the cutting section length (Ls) of the cutting section (As) along the central longitudinal axis (10) and in particular at least four times the cutting section length (Ls) of the cutting section (As).

9. Fastening anchor according to any one of the preceding claims, **characterised in that** the torque transmitting means (18) is arranged at the outer end (9) and in particular is designed as an external hexagonal profile.

10. Fastening anchor arrangement (1) in a material (2) comprising
a. a borehole (3) arranged in the material (2) having
i. a borehole diameter (D_{B}) and
ii. a borehole inner wall (4),
b. a fastening anchor (6) screwed into the borehole (3) according to any one of the preceding claims and
c. a composite material (19) arranged in the borehole (3) wherein
d. the cutting thread diameter (D_{SG}) of the fastening anchor (6) is greater than the borehole diameter (D_{B}) of the borehole (3) and
e. the fastening thread diameter (D_{BG}) of the fastening anchor (6) is smaller than the borehole diameter (D_{B}) of the borehole (3) and is smaller than a greatest cutting core diameter (D_{SK}).

11. Fastening anchor arrangement according to claim 10, **characterised in that** the composite material (19) has a thin consistency and in particular a viscosity of at most 10 mPa/s, in particular at most 1 mPa/s and in particular at most 0.1 mPa/s.

12. Fastening anchor arrangement according to claim 11, **characterised by** at least one crack (5) in the material (2) extending from the borehole (3), wherein the composite material (19) is arranged at least partly in the at least one crack (5).

13. Fastening anchor arrangement according to any one of claims 10 to 12, **characterised in that** the fastening section (A_{B}) protrudes at least partly on an end face (21) of the material (2) delimiting the borehole (3).

14. Fastening anchor arrangement according to any one of claims 10 to 13, **characterised in that** the composite material (19) connects the fastening section (A_{B}) to the cutting section (As).

15. Fastening anchor arrangement according to any one of claims 10 to 14, **characterised in that** the composite material (19) connects the fastening anchor (6) to the borehole inner wall (4) in the region of the fastening section (A_{B}).

## Revendications

1. Ancre de fixation (6) à visser dans un trou (3) percé dans un matériau (2), ladite ancre de fixation (6) comprenant
a. une âme (7) avec
i. une extrémité d'insertion (8),
ii. une extrémité extérieure (9) opposée à la précédente,
iii. un axe longitudinal médian (10) et
iv. une direction de vissage (11) parallèle à celui-ci,
b. un filet auto-taraudeur (12) formant une seule pièce avec l'âme (7), s'étendant au moins en partie le long d'un segment de taraudage (A_{S}) pour le vissage de celui-ci dans le matériau, avec
i. un diamètre d'âme de taraudage (D_{SK}),
ii. un diamètre de filet auto-taraudeur (D_{SG}) et
iii. une entrée de filet auto-taraudeur (14) située à l'extrémité d'insertion (8),
c. un filet de fixation (16) pour la fixation d'un élément de fixation, formant une seule pièce avec l'âme (7) et s'étendant le long d'un segment de fixation (A_{B}), avec
i. un diamètre d'âme de fixation (D_{BK}) et
ii. un diamètre de filet de fixation (D_{BG}),
d. un moyen de transfert de couple (18) disposé au niveau de l'âme (7), pour le transfert d'un couple de couple de rotation de vis d'un outil de vissage à l'âme (7) pour le vissage de celle-ci dans le matériau, **caractérisée en ce que**
le diamètre de filet de fixation (D_{BG}) est inférieur au diamètre maximal d'âme de taraudage (D_{SK}).

2. Ancre de fixation selon la revendication 1, **caractérisée par** au moins un élément de taraudage (15) du filet auto-taraudeur (12), destiné à pénétrer dans le matériau.

3. Ancre de fixation selon l'une des revendications précédentes, **caractérisée en ce que** le diamètre de filet de fixation (D_{BG}) est égal au maximum à 94 %, en particulier au maximum à 90 %, et tout particulièrement au maximum à 83 % du diamètre d'âme de taraudage (D_{SK}).

4. Ancre de fixation selon l'une des revendications précédentes, **caractérisée par** une tolérance de rectitude de l'axe longitudinal médian (10) égale au maximum à 17 %, en particulier au maximum à 10 % et tout particulièrement au maximum à 6 % du diamètre d'âme de taraudage (D_{SK}).

5. Ancre de fixation selon l'une des revendications précédentes, **caractérisée en ce que** l'âme (7) est réalisée en une seule pièce et en particulier produite par laminage.

6. Ancre de fixation selon l'une des revendications 1 à 5, **caractérisée en ce que** le segment de taraudage (A_{S}) est disposé sur une tête de taraudage (13) et le segment de fixation (A_{B}) sur une queue (17), la tête de taraudage (13) et la queue (17) étant fixement raccordées à l'âme (7), en particulier par soudage.

7. Ancre de fixation selon l'une des revendications précédentes, **caractérisée en ce que** le filet auto-taraudeur (12) comporte au moins trois spires, en particulier au moins quatre spires et tout particulièrement au moins cinq spires.

8. Ancre de fixation selon l'une des revendications précédentes, **caractérisée en ce qu'**une longueur (L_{B}) du segment de fixation (A_{B}) le long de l'axe longitudinal médian (10) est au moins égale à une longueur (L_{S}) de segment de taraudage et est en particulier supérieure à la longueur (L_{S}) de segment de taraudage, en égalant en particulier au moins le triple de la longueur (L_{S}) du segment de taraudage (A_{S}) le long de l'axe longitudinal médian (10) et tout particulièrement au moins le quadruple de la longueur (L_{S}) du segment de taraudage (A_{S}).

9. Ancre de fixation selon l'une des revendications précédentes, **caractérisée en ce que** le moyen de transfert de couple (18) est disposé à l'extrémité extérieure (9) et est réalisé en particulier comme profilé à six pans mâles.

10. Système d'ancre de fixation (1) dans un matériau (2), comprenant
a. un trou (3) percé dans le matériau (2), avec
i. un diamètre (D_{B}) de trou et
ii. une paroi intérieure (4) de trou,
b. une ancre de fixation (6) selon l'une des revendications précédentes, vissée dans le trou (3), et
c. une masse composite (19) disposée dans le trou (3), où
d. le diamètre de filet auto-taraudeur (D_{SG}) de l'ancre de fixation (6) est supérieur au diamètre (D_{B}) du trou (3), et
e. le diamètre de filet de fixation (D_{BG}) de l'ancre de fixation (6) est inférieur au diamètre (D_{B}) du trou (3) et inférieur à un diamètre maximal d'âme de taraudage (D_{SK}).

11. Système d'ancre de fixation selon la revendication 10, **caractérisé en ce que** la masse composite (19) est fluide et présente en particulier une viscosité de 10 mPa/s au maximum, en particulier de 1 mPa/s au maximum et tout particulièrement de 0,1 mPa/s au maximum.

12. Système d'ancre de fixation selon la revendication 11, **caractérisé par** au moins une fissure (5) dans le matériau (2), s'étendant à partir du trou (3), la masse composite (19) étant disposée au moins en partie dans ladite au moins une fissure (5).

13. Système d'ancre de fixation selon l'une des revendications 10 à 12, **caractérisé en ce que** le segment de fixation (A_{B}) dépasse au moins en partie d'une surface frontale (21) du matériau (2) délimitant le trou (3).

14. Système d'ancre de fixation selon l'une des revendications 10 à 13, **caractérisé en ce que** la masse composite (19) relie le segment de fixation (A_{B}) au segment de taraudage (A_{S}).

15. Système d'ancre de fixation selon l'une des revendications 10 à 14, **caractérisé en ce que** la masse composite (19) relie l'ancre de fixation (6) à la paroi intérieure (4) du trou au niveau du segment de fixation (A_{B}).
